# EUROPÄISCHE PATENTANMELDUNG

(11) **EP 1 985 897 A1**
(43) Veröffentlichungstag der Anmeldung: **29.10.2008**
(21) Anmeldenummer: 07020452.4
(22) Anmeldetag: 18.10.2007
(51) Int. Cl.: F16J 15/08, F02F 11/00

(54) **Metallische Flachdichtung**

(30) Priorität: 24.04.2007 EP 07008321
(71) Anmelder: REINZ-Dichtungs-GmbH, 89233 Neu-Ulm (DE)
(72) Erfinder: Egloff, Georg, 89264 Weißenhorn (DE); Unseld, Günther, 89189 Neenstetten (DE); Höhe, Kurt, 89129 Langenau (DE)
(74) Vertreter: Tomerius, Isabel

(57) **Zusammenfassung**

Die Erfindung betrifft eine metallische Flachdichtung (1) mit wenigstens einer ersten und einer zweiten Dichtungslage (2,3), in der zumindest in die erste Dichtungslage (2) eine Sicke (20) eingeformt ist, welche eine durch die Flachdichtung (1) hindurchgehende Durchgangsöffnung (4) in sich geschlossen umgibt. Die erste Dichtungslage (2) weist eine geringere Flächenausdehnung auf als die zweite Dichtungslage (3) und lässt einen an den Außenrand (5) der Flachdichtung angrenzenden Randbereich (6) frei. In der zweiten Dichtungslage (3) ist im Randbereich (6) ein zumindest in Richtung auf die erste Dichtungslage (2) vorstehender Ausgleichsbereich (7) mit einer Höhe vorhanden, die geringer als die Dicke der ersten Dichtungslage (2). Der Ausgleichsbereich (7) ist zumindest abschnittsweise entlang des Außenrandes (21) der ersten Dichtungslage (2) angeordnet und besteht aus einer Vielzahl in die zweite Dichtungslage (3) eingeformter, einander abwechselnder Erhebungen (31) und Vertiefungen (32).

## Beschreibung

Die Erfindung betrifft eine metallische Flachdichtung mit wenigstens zwei Dichtungslagen, durch welche wenigstens eine Durchgangsöffnung hindurchgeht. In wenigstens eine der Dichtungslagen ist eine Sicke eingeformt, welche die Durchgangsöffnung in sich geschlossen umgibt. Derartige metallische Flachdichtungen werden beispielsweise als Dichtung im Bereich von Verbrennungsmotoren und Abgasstrang, insbesondere als Abgaskrümmerdichtungen oder als Zylinderkopfdichtungen eingesetzt.

Um zu erreichen, dass die Sicke die Durchgangsöffnung zuverlässig abdichtet, ist es im Allgemeinen erforderlich, dass die Sicke gleichmäßig und mit ausreichend hoher Pressung belastet wird. Dies gilt insbesondere für die Abdichtung von Brennraumöffnungen in Zylinderkopfdichtungen und hier insbesondere für Zylinderkopfdichtungen, die in Motoren mit Open-Deck-Konstruktionen eingesetzt werden. Zur Erhöhung der Pressung im Bereich der Sicke sind Zylinderkopfdichtungen vorgeschlagen worden, in denen um die Brennraumöffnung herum eine brillenartig geformte zusätzliche Lage vorhanden ist. Diese zusätzliche Lage wird im Englischen häufig als "shim" bezeichnet. Bei einem solchen Shim handelt es sich um eine gegenüber den restlichen Dichtungslagen verkürzte Lage, die oft nur wenig über den Bereich der von den Brennraumöffnungen aus gesehen äußeren Sickenfüße reicht und ggf. an den Wassermantel heranreicht. Meist ist sie eine plane Lage, die ausschließlich der Erhöhung der Gesamtdicke der Dichtung im Bereich der Sicken dient und keinerlei Abdichtelemente enthält. In der Regel verzichten derartige Dichtungskonstruktionen - vor allem, wenn sie für Benzinmotoren bestimmt sind - auf Verformungsbegrenzer (Stopper) für die Sicken, durch welche seitlich benachbart zu den Sicken eine Materialverdickung erzeugt wird, die ein vollständiges Abplatten der Sicken während des Betriebs verhindern sollen. Der Zweck des Shims ist also eine Materialverdickung im Aufstandsbereich der Sicken, die dazu führt, dass die Sicken im Krafthauptschluss liegen und die Pressung im Bereich der Sicken erhöht wird. Beispiele von Zylinderkopfdichtungen mit Shim sind beispielsweise in der EP 1065417 A2 beschrieben.

Nachteilig an den vorstehend beschriebenen Zylinderkopfdichtungen ist jedoch, dass ihre Fertigung vergleichsweise aufwändig und teuer ist. So muss der Shim gesondert und in der Regel aus einem anderen Material als die weiteren Dichtungslagen hergestellt werden. Das zusätzliche Teil erfordert bei der Montage der Dichtung einen erhöhten Aufwand. Zudem ist die Dickeneinstellung der Dichtung oft schwierig. Die Dicke des Shims leite sich von der gewünschten Pressungserhöhung der Dichtung für einen bestimmten Motor ab. Die benötigte Pressungserhöhung lässt sich oft mit relativ geringen Materialstärken erreichen, z.B. zwischen 0,05 und 0,15 mm. Bei einer Materialstärke von weniger als 0,1 mm wird die Verarbeitung des Shims jedoch sehr aufwändig und schwierig, da beispielesweise beim Stanzen, aber auch beim Transport, Verwerfungen innerhalb des Metallblechs auftreten.

Es bestand daher ein Bedarf an einer metallischen Flachdichtung, die einfach und aus möglichst wenigen Teilen konstruiert ist und bei der sich - gerade auch bei einer geringen Aufdickung der Dichtung im Bereich des Shims - die auf die Sicken wirkende Pressung in einfacher Weise nach Wunsch einstellen lässt. Aufgabe der Erfindung ist es entsprechend, eine derartige metallische Flachdichtung anzugeben.

Die Lösung dieser Aufgabe gelingt mit der metallischen Flachdichtung gemäß Anspruch 1. Bevorzugte Weiterbildungen der Flachdichtung sind in den Unteransprüchen beschrieben.

Die erfindungsgemäße metallische Flachdichtung weist wenigstens zwei metallische Dichtungslagen, nämlich eine erste und eine zweite Dichtungslage, auf. Zur Abdichtung einer durch die Flachdichtung hindurchgehenden Durchgangsöffnung ist zumindest in die erste Dichtungslage eine Sicke eingeformt, welche die Durchgangsöffnung in sich geschlossen umgibt. Die erste Dichtungslage mit der Sicke weist eine geringere Flächenausdehnung auf als die zweite Dichtungslage und lässt einen an den Außenrand der Flachdichtung angrenzenden Bereich, im folgenden als Randbereich bezeichnet, frei. Der Anteil dieses Randbereiches an der gesamten Dichtungsfläche hängt von der individuellen Dichtung ab. Der Begriff Randbereich soll also nicht ausschließlich als schmaler Randstreifen verstanden werden. In der zweiten Dichtungslage ist im Randbereich ein in Richtung auf die erste Dichtungslage vorstehender Ausgleichsbereich vorhanden. Die Höhe dieses Ausgleichsbereichs ist geringer als die Dicke der ersten Dichtungslage. Der Ausgleichsbereich erstreckt sich zumindest abschnittsweise entlang des Außenrandes der ersten Dichtungslage und besteht aus einer Vielzahl in die zweite Dichtungslage eingeformter, einander abwechselnder Erhebungen und Vertiefungen.

Durch die erfindungsgemäße Ausbildung der metallischen Flachdichtung wird um die Durchgangsöffnung herum, dort wo die erste und die zweite Dichtungslage vorhanden sind, ein Bereich gebildet, in dem die Materialdicke aller Dichtungslagen größer ist als in den von der Durchgangsöffnung weiter entfernt gelegenen Bereichen, in denen die erste Dichtungslage nicht vorhanden ist. Entsprechend wird im Bereich der in die erste Dichtungslage eingeformten Sicke eine erhöhte Pressung erzeugt. Anders als im Stand der Technik geschieht dies jedoch nicht durch Hinzufügen eines Shims, sondern durch die Verkürzung der ersten Dichtungslage, die den Randbereich der Dichtung ausspart. In dieser Weise kann die Pressungserhöhung sehr viel einfacher als im Stand der Technik erzielt werden und die Sicke sehr einfach in den Krafthauptschluss gelegt werden.

Allein durch die Maßnahme der Verkürzung der ersten Dichtungslage würde jedoch nur eine sehr grobe Einstellung der Pressungserhöhung im Bereich der Sicke möglich sein. Die Pressungserhöhung wäre immer durch die Dicke der ersten Dichtungslage vorgegeben und von den auf dem Markt verfügbaren Materialstärken abhängig oder würde die teure Fertigung von Sondermaterial erfordern. Da in die erste Dichtungslage eine Sicke eingeformt ist, welche Dichtfunktion übernimmt, muss die erste Dichtungslage eine gewisse Mindestmaterialstärke aufweisen. Diese Mindestdicke ist jedoch oft zur Einstellung der geeigneten Pressung im Bereich der Sicke zu groß. Zur Einstellung einer geeigneten Dickendifferenz zwischen dem Randbereich der Dichtung und dem Bereich, in welchem die erste Dichtungslage vorhanden ist, ist deshalb in der zweiten Dichtungslage ein Ausgleichsbereich vorgesehen. Dieser Ausgleichsbereich kann in seiner Höhe gezielt so eingestellt werden, dass sich die für die gewünschte Pressung erforderliche Materialaufdickung im Bereich der die Durchgangsöffnung umgebenden Sicke einstellt. Dies geschieht dadurch, dass die in der zweiten Dichtungslage im Ausgleichsbereich vorhandenen Erhebungen mit einer geeigneten Höhe hergestellt werden. Die Höhe der Erhebungen liegt dabei im Bereich zwischen Null und der Dicke der ersten Dichtungslage, wobei die beiden Grenzwerte jeweils nicht zu dem Höhenbereich zählen. Besonders bevorzugt sind Dicken im Bereich von 30-80 % der Dicke der ersten Dichtungslage. Die Höhe der Erhebungen kann dabei über den Ausgleichsbereich gleich oder verschieden sein.

Die erfindungsgemäße metallische Flachdichtung weist gegenüber den herkömmlichen Dichtungen mit Shim den Vorteil einer deutlich vereinfachten Konstruktion auf. So kann auf den zusätzlichen Shim zur Erhöhung der Pressung im Bereich der Sicke vollständig verzichtet werden. Dies vereinfacht einerseits die Konstruktion der Dichtung, spart Material und erleichtert die Handhabung bei der Herstellung. Die erfindungsgemäße Flachdichtung ist zudem sehr variabel einsetzbar, da die gewünschte Pressung im Bereich der Sicke durch geeignete Abstimmung der Materialdicken der Dichtungslagen und der Höhe des Ausgleichsbereichs in vielfältiger Art und Weise eingestellt werden kann. Die Erfindung ist nicht nur auf zweilagige Dichtungen anwendbar, sondern auch auf Dichtungen, die drei oder mehr Dichtungslagen umfassen.

Der Ausgleichsbereich schließt sich radial außerhalb der ersten Dichtungslage an deren Außenrand an. Vorzugsweise ist der Ausgleichsbereich in der zweiten Dichtungslage mit einem Abstand zum Außenrand der ersten Dichtungslage angeordnet. Der Abstand ist dabei mindestens so groß, dass auch im maximal belasteten Zustand der Flachdichtung keine Überlappung des Ausgleichsbereichs mit der ersten Dichtungslage stattfindet. Der Ausgleichsbereich in der zweiten Dichtungslage kann so ausgebildet werden, dass er die verkürzte erste Dichtungslage vollständig umgibt. Dies ist jedoch nicht unbedingt erforderlich. Es kann vielmehr auch ausreichen, wenn der Ausgleichsbereich nur entlang eines oder mehrerer Teilabschnitte des Außenrandes der ersten Dichtungslage verläuft. Diese Teilabschnitte sind bevorzugt möglichst gleichmäßig um den Außenrand der ersten Dichtungslage herum verteilt.

In einer bevorzugten Variante der Erfindung ist der Ausgleichsbereich im Bereich um mehrere Öffnungen vorhanden, die in der zweiten Dichtungslage in deren Randbereich ausgebildet sind. Bei diesen Öffnungen im Randbereich der zweiten Dichtungslage kann es sich insbesondere um Befestigungsmittelöffnungen, im Falle von Zylinderkopfdichtungen auch um Öl- oder Kühlflüssigkeitsöffnungen handeln. Dabei kann der Ausgleichsbereich so ausgebildet sein, dass er mehrere dieser Öffnungen zusammenhängend umgibt. Vorzugsweise ist der Ausgleichsbereich entlang wenigstens 35 %, bevorzugt wenigstens 50 % und insbesondere wenigstens 70 % der Länge des Außenrandes der ersten Dichtungslage vorhanden. Alternativ ist es möglich, jeweils eine Öffnung mit einem separaten Ausgleichsbereich ganz oder teilweise zu umgeben. Beispielsweise kann jede der Öffnungen von einem ringförmigen Ausgleichsbereich umgeben sein oder - im Falle einer nur teilweisen Umschließung - von einem Ringsegment,. Bevorzugt handelt es sich bei den von einem separaten Abschnitt des Ausgleichsbereichs umgebenen Öffnungen um Befestigungsmittelöffnungen. Wenn diese geschlossen von dem Ausgleichsbereich umgeben werden, kann der Ausgleichsbereich gleichzeitig als Abstützbereich und als Dichtelement für die Befestigungsmittelöffnung dienen. Dies gilt insbesondere dann, wenn die Erhebungen und Vertiefungen wellenartig in Form einander abwechselnder konzentrischer Ringe ausgebildet sind.

Die Ausführung der Erhebungen und Vertiefungen in der Weise, dass sie eine wellenartige Strukturierung bilden, ist eine zweckmäßige Ausführungsart des Ausgleichsbereichs. Besonders bevorzugt sind die Erhebungen und Vertiefungen dabei in Form konzentrischer Ringe oder Ringsegmente ausgebildet. Derartige Strukturierungen der Dichtungslage sind bereits als Stopper für Sicken bekannt, die eine Öffnung in einer Zylinderkopfdichtung abdichten, und werden üblicherweise als Wellen-Stopper bezeichnet. Solche Wellen-Stopper sind bereits in der WO 01/96768 A1 und der DE 102004011721 A1 der Anmelderin beschrieben. Diese Art der Strukturierung sowie die Art der Herstellung können für den Ausgleichsbereich der vorliegenden Erfindung in der beschriebenen Weise eingesetzt werden. Es kann insofern auf den Inhalt der genannten Druckschriften verwiesen werden.

In einer alternativen Ausführungsform sind die Erhebungen und Vertiefungen des Ausgleichsbereichs auf wenigstens einer Schar im Wesentlichen parallel über die Gesamtausdehnung des Ausgleichsbereichs verlaufender virtueller gerader Linien angeordnet. Bevorzugt wechseln sich dabei die Erhebungen und Vertiefungen quer zur Erstreckungsrichtung der Linien ab. Eine derartige Strukturierung ist ebenfalls grundsätzlich für metallische Flachdichtungen bereits bekannt und ebenfalls von der Anmelderin der vorliegenden Erfindung beschrieben, nämlich in der europäischen Patentanmeldung 07008321.7. Die Erhebungen und Vertiefungen sind im Querschnitt bevorzugt trapezförmig, dreieckig, gerundet oder rechteckig.

Bei der Schar im Wesentlichen parallel verlaufender gerader Linien handelt es sich um virtuelle Linien. Diese Linien setzen sich zwar über die gesamte Fläche des Ausgleichsbereiches fort, jedoch müssen nicht zwangsläufig an jeder Stelle dieser Linien auch Erhebungen oder Vertiefungen vorhanden sein. Beispielsweise können die virtuellen Linien den Bereich einer Öffnung oder eines Dichtelementes schneiden, in denen keine Erhebungen und Vertiefungen vorhanden sind. In einem solchen Fall verlaufen Erhebung(en) und/oder Vertiefung(en) auf einer virtuellen geraden Linie bis an die Öffnung oder das Dichtelement heran, werden dort unterbrochen und setzen sich dann auf der gegenüberliegenden Seite auf derselben geraden Linie weiter fort. Ist der Ausgleichsbereich in mehrere Abschnitte aufgeteilt, so ist die Schar im Wesentlichen parallel verlaufender gerader Linien grundsätzlich über die gesamte Fläche des Ausgleichsbereichs gezogen, während die Erhebungen und Vertiefungen auf diesen Linien nur in den Ausgleichsbereichs-Abschnitten, nicht aber in deren Zwischenräumen vorhanden sind. Die Erhebungen sind jeweils durch Vertiefungen voneinander getrennt. Unter einem im Wesentlichen parallelen Verlauf der Linien soll hier eine Abweichung von der Parallelität von maximal 5 ° und insbesondere maximal 2 ° verstanden werden.

Die Erhebungen und Vertiefungen im Ausgleichsbereich der erfindungsgemäßen Flachdichtung werden bevorzugt durch Prägen hergestellt. Werden dabei zwei komplementäre Prägeformen verwendet, deren Erhebungen jeweils gegenüber den Erhebungen der anderen Prägeform seitlich versetzt sind und in die Vertiefungen der Gegenform eingreifen, ergibt sich ein Ausgleichsbereich, dessen Erhebungen über beide Oberflächen der zweiten Dichtungslage vorstehen. Die Materialaufdickung durch die Strukturierung im Ausgleichsbereich wird also zu beiden Oberflächen der zweiten Dichtungslage wirksam. Um die Materialverdickung im Ausgleichsbereich vollständig für die erste Dichtungslage wirksam zu machen, kann der Ausgleichsbereich der zweiten Dichtungslage beispielsweise in Richtung auf die erste Dichtungslage hin gekröpft werden. Ebenfalls lässt sich durch asymmetrische Werkzeug-Gestaltung erreichen, dass die Erhebungen des Ausgleichsbereichs nur über eine Oberfläche der zweiten Dichtungslage vorstehen.

Insgesamt weist der Ausgleichsbereich in seinem Querschnitt Erhebungen, Vertiefungen und jeweils einen Übergangsbereich, auch als Flanke bezeichnet, zwischen benachbarten Erhebungen und Vertiefungen auf. Die Strukturen werden bevorzugt mittels Verpressens erzeugt. Dabei wird das Material im Bereich der Flanke gegenüber der Materialstärke im Bereich der Erhebungen und Vertiefungen verringert, wodurch der Ausgleichsbereich versteift wird. Die Materialverjüngung im Flankenbereich beträgt dabei mindestens 8 %, bevorzugt mindestens 10 %, besonders bevorzugt mindestens 13 % und insbesondere mindestens 15 % relativ zur Materialstärke im Bereich der benachbarten Erhebung bzw. Vertiefung.

Der Ausgleichsbereich kann neben den oben genannten quer zur Erstreckungsrichtung der virtuellen geraden Linien sich abwechselnden Erhebungen und Vertiefungen auch so ausgestaltet sein, dass Erhebungen und Vertiefungen auf zu einander benachbarten Linien jeweils versetzt zueinander angeordnet sind. In diesen Fall ergibt sich eine schachbrettähnliche Struktur von Erhebungen und Vertiefungen. Bevorzugt verlaufen die Vertiefungen entlang mindestens zweier sich schneidender Scharen virtueller gerader Linien. Besonders bevorzugt ist eine Anordnung auf sich rechtwinklig schneidenden virtuellen geraden Linien. In der sich dabei ergebenden Gesamtstruktur weisen die Erhebungen die Form eines Polyederstumpfes auf.

Durch die Strukturierung im Ausgleichsbereich besitzt die zweite Dichtungslage dort eine größere Dicke als die Dicke der originären Dichtungslage, d.h., der planen Dichtungslage vor Einbringen der Strukturierung. Die Höhe des Ausgleichsbereichs wird dabei als Abstand zwischen zwei Tangentialebenen gemessen, die jeweils parallel zur Ebene der nicht verformten Dichtungslage verlaufen. Der Abstand wird also zwischen der Ebene der unbehandelten Dichtungslage und einer Ebene gemessen, die an den über diese Oberfläche der Dichtungslage vorstehenden Erhebungen anliegt. Dabei muss die Höhe der Erhebungen nicht über den gesamten Ausgleichsbereich gleich hoch sein. Vertiefungen sind gegenüber den Erhebungen niedrigere Bereiche, also nicht unbedingt Bereiche, die in die Ebene der unverformten Dichtungslage eingetieft sind.

Durch das Prägen des Ausgleichsbereiches können Materialverdickungen in einem sehr breiten Bereich variabel eingestellt werden, ohne dass zusätzliches Material benötigt wird. Die Materialverdickung muss - wie ausgeführt - nicht über den gesamten Ausgleichsbereich einheitlich ausgebildet sein, sondern kann vielmehr über die Fläche des Ausgleichsbereiches variieren. Es kann also im Ausgleichsbereich eine Topographie erzeugt werden, die eine gezielte Beeinflussung der Pressung der Sicke in der ersten Dichtungslage und eine Anpassung an die abzudichtenden Gegenflächen und deren Bauteilsteifigkeiten ermöglicht. Bevorzugt wird die Topographie im Ausgleichsbereich dabei so gewählt, dass die Pressung der Sicke in der ersten Dichtungslage möglichst gleichmäßig wird. Bevorzugt wird die Höhe des Ausgleichsbereichs so eingestellt, dass die Erhebungen um 0,02 bis 0,3 mm und insbesondere 0,05 bis 0,20 mm über die zweite Dichtungslage vorstehen. Die Höhe kann schon bei Herausarbeiten der Erhebungen aus der Dichtungslage eingestellt werden oder dadurch, dass die erzeugten Erhebungen nach ihrer Herstellung abschnittsweise oder über den gesamten Ausgleichsbereich planiert werden.

Wie bereits erwähnt, können im so genannten Hinterland der Dichtung - also im Außenrandbereich - weitere Öffnungen vorhanden sein. Im Falle von Zylinderkopfdichtungen sind dies Öffnungen für Befestigungsmittel, Öl und Kühlflüssigkeit. Diese Öffnungen können jeweils wie im Stand der Technik üblich mit Dichtelementen abgedichtet sein. Hier können grundsätzlich die im Stand der Technik gebräuchlichen Dichtelemente eingesetzt werden, also beispielsweise Dichtelemente aus Elastomer und/oder in die zweite Dichtungslage eingeformte Sicken. Das Elastomer kann ein- oder beidseitig auf die Dichtungslage aufgetragen oder an den Öffnungsrand angespritzt sein. Die Dichtelemente des Hinterlandes können auch auf an sich bekannte Weise als separate, in die Dichtungslage eingesetzte Bereiche (so genannte Inserts) ausgebildet sein. Der Ausgleichsbereich kann so ausgebildet werden, dass er - wie bereits vorstehend erwähnt - entweder selbst als Dichtelement für eine Hinterland-Öffnung fungiert oder als Abstützelement für ein Hinterlanddichtelement. Dabei sollte jedoch zwischen dem Ausgleichsbereich und dem Hinterlanddichtelement (Elastomer oder Sicke) ein ausreichender Abstand vorhanden sein, um das elastische Dichtelement nicht zu beeinträchtigen. Geeignete Abstände liegen beispielsweise bei mindestens 0,1 mm. Außerdem kann es sinnvoll sein, dass der Ausgleichsbereich einen Abstand zum Außenrand der zweiten Dichtungslage einhält, beispielsweise wenn entlang des Außenrandes der zweiten Dichtungslage eine Sicke oder Halbsicke verläuft. Alternativ ist es aber ebenso möglich, den Ausgleichsbereich bis zum Außenrand der Dichtung zu führen.

Um möglichst viel Material einzusparen, ist die erste Dichtungslage von Vorteil nur gerade so groß, wie unbedingt nötig. Üblicherweise bedeutet dies, dass die erste Dichtungslage nur so weit ausgedehnt wird, wie es für die Funktion der in die Dichtungslage eingeformten Sicke erforderlich ist. Bevorzugt wird deshalb die erste Dichtungslage möglichst nah an dem von der Durchgangsöffnung abgewandten Fuß der Sicke enden. Bei einem Open-Deck-Motor reicht die erste Dichtungslage dabei üblicherweise mindestens bis zum äußeren Rand des Zylindermantels und ragt mitunter sogar etwas in den Bereich des Wassermantels hinein. In der einfachsten Ausführungsform weist die erfindungsgemäße metallische Flachdichtung in der erste Dichtungslage lediglich eine einzige Durchgangsöffnung auf, die von einer Sicke umschlossen wird. Die erste Dichtungslage ist dann lediglich ring- und insbesondere kreisringförmig. In vielen Fällen wird die metallische Flachdichtung jedoch mehrere Durchgangsöffnungen haben, die jeweils von einer in die erste Dichtungslage eingeformten Sicke umgeben werden. Dabei ist es bei einem nur geringen Abstand zwischen benachbarten Durchgangsöffnungen möglich, dass die Sicken im Stegbereich zwischen benachbarten Durchgangsöffnungen zu einem einzigen Sickenabschnitt zusammenlaufen. Im Falle mehrerer Durchgangsöffnungen ist die erste Dichtungslage bevorzugt brillenartig ausgebildet, wie dies grundsätzlich bereits aus dem Stand der Technik beispielsweise für Shims bekannt ist (vergleiche EP 1065417 A2).

In einer einfachen Ausgestaltung weist die erfindungsgemäße metallische Flachdichtung neben der ersten Dichtungslage lediglich eine weitere, nämlich die zweite Dichtungslage, auf, in welche der Ausgleichsbereich eingeformt ist. In einer besonders einfachen Variante handelt es bei der zweiten Dichtungslage um ein - abgesehen von dem Ausgleichsbereich - vollkommen ebenes Blech. Auf die alternative Möglichkeit, für die Abdichtung von Öffnungen im Hinterland der Dichtung in der zweiten Dichtungslage ein oder mehrere elastisch verformbare Dichtelemente anzubringen, wurde bereits hingewiesen. Außerdem ist es möglich, in der zweiten Dichtungslage ein elastisch verformbares Dichtelement zur Abdichtung der durch die erste und die zweite Dichtungslage hindurchgehenden Durchgangsöffnung vorzusehen. Bevorzugt handelt es sich bei diesem Dichtelement um eine in die zweite Dichtungslage eingeformte Sicke, welche die Durchgangsöffnung umgibt. Bevorzugt ist die Sicke der zweiten Dichtungslage gleichartig wie die Sicke der ersten Dichtungslage ausgebildet. Beide Sicken können mit den Sickenscheiteln aufeinander zuweisend oder auch voneinander wegweisend angeordnet werden. Im Fall, dass in der ersten und der zweiten Dichtungslage jeweils Sicken zur Abdichtung der Durchgangsöffnung vorhanden sind, bestehen beide Dichtungslagen bevorzugt aus dem gleichen Material, um eine gleiche Federkonstante für die Sicken in beiden Dichtungslagen zu erhalten. Die Verwendung gleicher Materialien für die Dichtungslagen erleichtert zudem die Herstellung und senkt die Kosten. Es ist jedoch auch möglich, für beide Dichtungslagen unterschiedliche Materialien zu verwenden und - wenn eine gleiche Federkonstante für die die Durchgangsöffnung umgebenden Sicken gewünscht ist - diese Federkonstante durch die Formgebung der Sicken oder in sonstiger an sich bekannter Weise einzustellen.

Die erfindungsgemäße Flachdichtung ist nicht auf zweilagige Dichtungen beschränkt, sondern es können eine oder mehrere weitere Dichtungslagen vorhanden sein. Handelt es sich bei der zweiten Dichtungslage um ein Blech, in dem lediglich der Ausgleichsbereich, aber keine Sicken vorhanden sind, kann die zusätzliche Dichtungslage als Aktivblech ausgebildet sein, in das zur Abdichtung der Durchgangsöffnung und gegebenenfalls auch zur Abdichtung von weiteren Öffnungen im Hinterland der Dichtungslage Sicken eingeformt oder Dichtelemente aus Elastomer vorhanden sind. Auch Flachdichtungen mit vier oder mehr Dichtungslagen können hergestellt werden, wobei die zusätzlichen Dichtungslagen reine Distanzlagen ohne Funktionselemente und insbesondere ohne elastisch verformbare Dichtelemente sein können oder es sich um Aktivlagen mit elastisch verformbaren Dichtelementen handelt. Die Dichtungslagen können auch, wie grundsätzlich aus dem Stand der Technik bekannt, Verformungsbegrenzer für elastische Dichtelemente in Form von Materialverdickungen (durch Umfalzen, Anstauchen, Materialauflagen, Prägung usw.) enthalten, dies ist jedoch nicht bevorzugt.

Zudem können einzelne oder alle der Dichtungslagen der erfindungsgemäßen Flachdichtung ganz oder teilweise, ein- oder beidseitig beschichtet sein. Hier können die an sich bekannten Beschichtungen zur Verbesserung der Mikroabdichtung, der Gleitreibeigenschaften usw. verwendet werden. Dabei wird die Haftung der Beschichtung in diesem Bereich verbessert. Außerdem können aufgrund der Struktur des Ausgleichsbereichs in der zweiten Dichtungslage vergleichsweise große Schichtdicken realisiert werden.

Die einzelnen Dichtungslagen der erfindungsgemäßen Flachdichtung können auf im Stand der Technik übliche Weise miteinander verbunden werden, zum Beispiel durch Nieten, Schweißen (Punkt-, Laserschweißen usw.), durch Clinchen, Löten, Kleben, Anclipsen usw.

Die erfindungsgemäße metallische Flachdichtung eignet sich für eine Vielzahl von Anwendungen, beispielsweise als Flanschdichtung, Abgaskrümmerdichtung oder ähnliches. Der Begriff Flachdichtung schließt ausdrücklich auch solche dreidimensional verformten Dichtungen ein, die aus einem zweidimensionalen Körper verformt wurden, so z.B. konische Dichtungen. Besonders geeignet ist die erfindungsgemäße Flachdichtung als Zylinderkopfdichtung, wobei die Durchgangsöffnungen den Brennraumöffnungen entsprechen. Besonders eignet sich eine derartige Zylinderkopfdichtung für Motoren mit Zylinderlaufbuchsen und insbesondere für Open-Deck-Motoren, in denen die Wasseröffnungen zur Oberseite des Motorblocks hin offen sind. Die in die erste Dichtungslage eingeformte Sicke wird dabei zweckmäßig so angeordnet, dass sich ihr Sickenscheitel über dem Zylindermantel befindet. Die Zylinderkopfdichtung wird bevorzugt so ausgeführt, dass keine Verformungsbegrenzer für die die Brennraumöffnungen umgebenden Sicken vorhanden sind. In dieser Form eignet sich die Dichtung insbesondere für die Anwendung in Benzinmotoren. Es wird eine sehr einfach aufgebaute Dichtung erhalten, die weder einen Shim noch Verformungsbegrenzer benötigt, bei der aber dennoch eine ausreichende und um die Brennraumöffnungen herum gleichmäßige Pressung erzielt werden kann. Aber auch Varianten der Dichtung mit Verformungsbegrenzern für die Brennraumsicken (ein- oder beidseitig der Sicke) sind möglich. In diesem Fall sollte die Höhe der Verformungsbegrenzer jedoch geringer sein als die Höhe des Ausgleichsbereiches, da sonst die Verformungsbegrenzer die Funktion des Ausgleichsbereichs beeinträchtigen können. Die Verformungsbegrenzer können auf jede aus dem Stand der Technik übliche Weise ausgebildet sein. Bevorzugt ist es jedoch, wenn sie - wie der Ausgleichsbereich - aus einer in die Dichtungslage eingeformten Strukturierung in Form einander abwechselnder Erhebungen und Vertiefungen bestehen. Zweckmäßig werden die Verformungsbegrenzer im selben Schritt wie der Ausgleichsbereich erzeugt, bevorzugt durch Prägen.

Die erfindungsgemäße metallische Flachdichtung lässt sich aus den bisher für metallische Flachdichtungen üblichen Materialien mit den gängigen Fertigungswerkzeugen herstellen. Als Material derjenigen Dichtungslagen, in welche Sicken als Dichtelemente für Durchgangsöffnungen eingeformt sind, wird zweckmäßig Federstahl verwendet. Für die anderen Dichtungslagen, die keine Sicken aufweisen, kann weicherer Stahl, beispielsweise Baustahl, verwendet werden. Edelstähle sind ebenso möglich wie Kohlenstoffstähle. Daneben ist auch die Verwendung hochtemperaturstabiler Legierungen, insbesondere von Nickel-reichen Stählen denkbar.

Die Erfindung soll nachfolgend anhand von Zeichnungen näher erläutert werden. Die Figuren dienen ausschließlich der Darstellung bevorzugter Ausführungsbeispiele, ohne dass die Erfindung auf diese beschränkt wäre. In den Figuren bezeichnen gleiche Bezugszeichen gleiche Teile. In den Figuren zeigen schematisch:
- Figur 1 (a): eine Draufsicht auf ein erstes Ausführungsbeispiel einer metallischen Flachdichtung am Beispiel einer Zylinderkopfdichtung;
- Figur 1 (b): einen Querschnitt entlang der Linie G-G in Figur 1 (a);
- Figur 2: eine Draufsicht auf ein weiteres Beispiel einer metallischen Zylinderkopfdichtung mit vier Detaitausschnitten;
- Figuren 3(a) bis 3(d): Draufsichten auf die einzelnen Lagen einer erfindungsgemäßen zweilagigen Zylinderkopfdichtung zusammen mit Draufsichten auf die abzudichtenden Gegenflächen, nämlich im Einzelnen

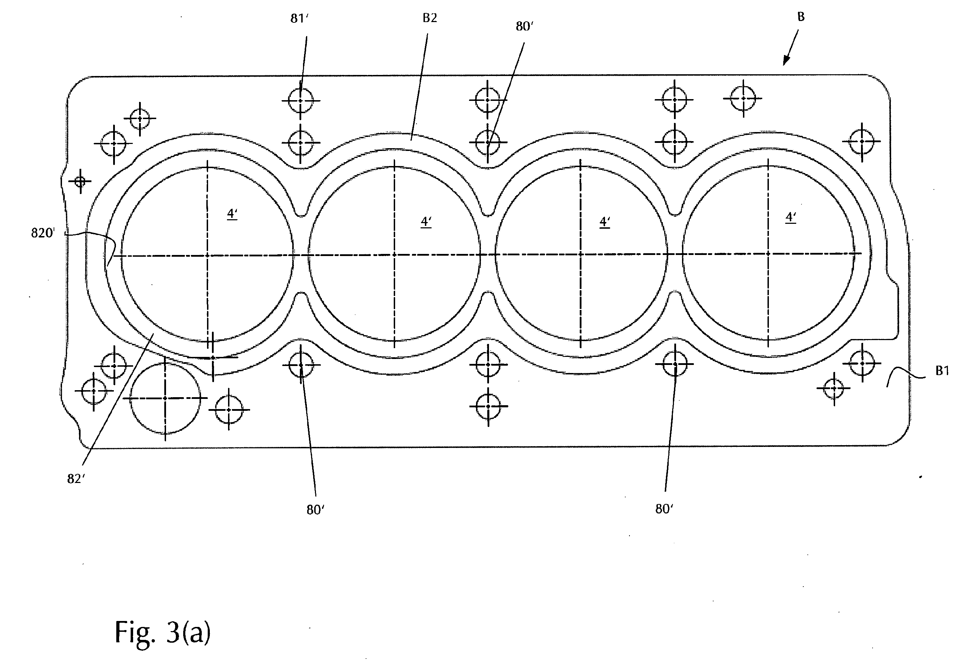

- Figur 3(a): eine Draufsicht auf die Motorblock-Oberfläche;

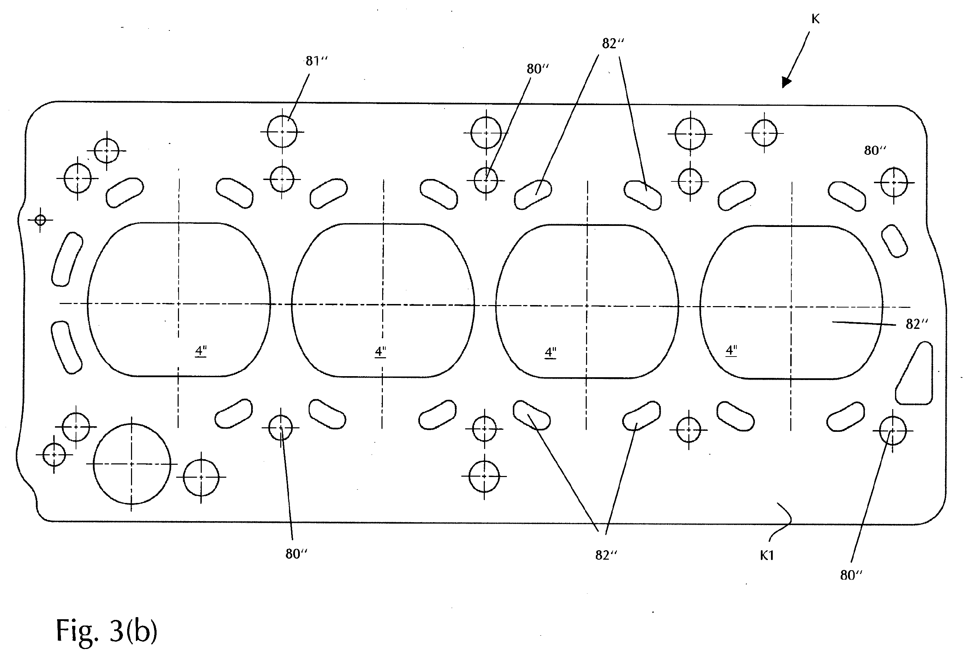

- Figur 3(b): eine Draufsicht auf die Oberfläche des Zylinderkopfes;

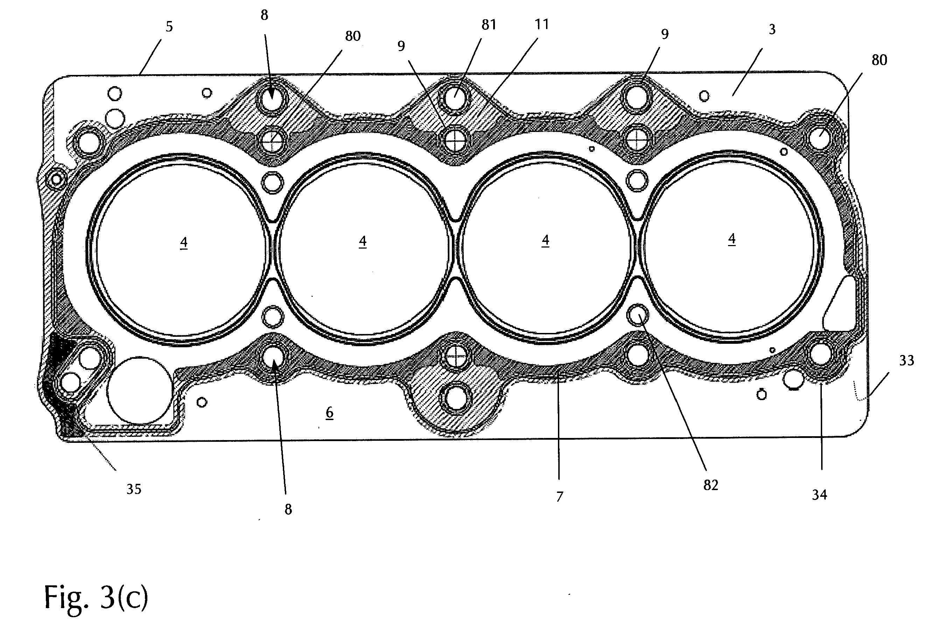

- Figur 3(c): eine Draufsicht auf die zweite Dichtungslage der erfindungsgemäßen Flachdichtung und

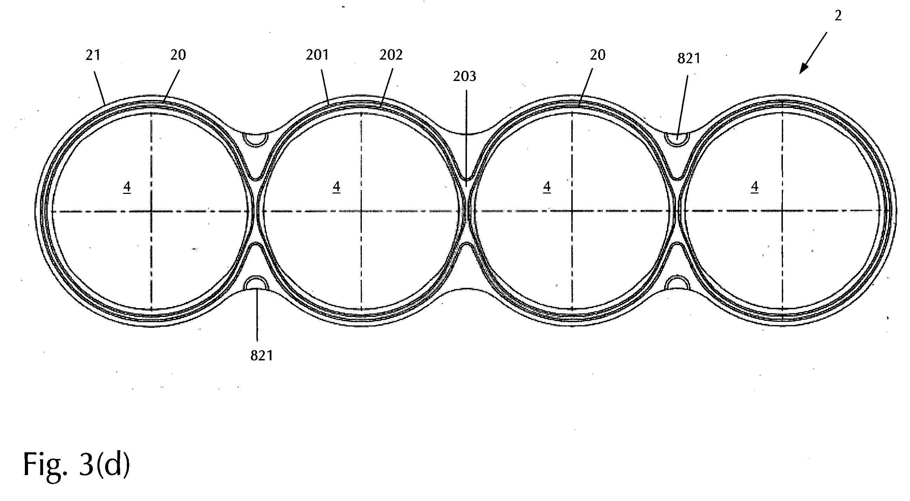

- Figur 3(d): eine Draufsicht auf die erste Dichtungslage der erfindungsgemäßen Zylinderkopfdichtung;

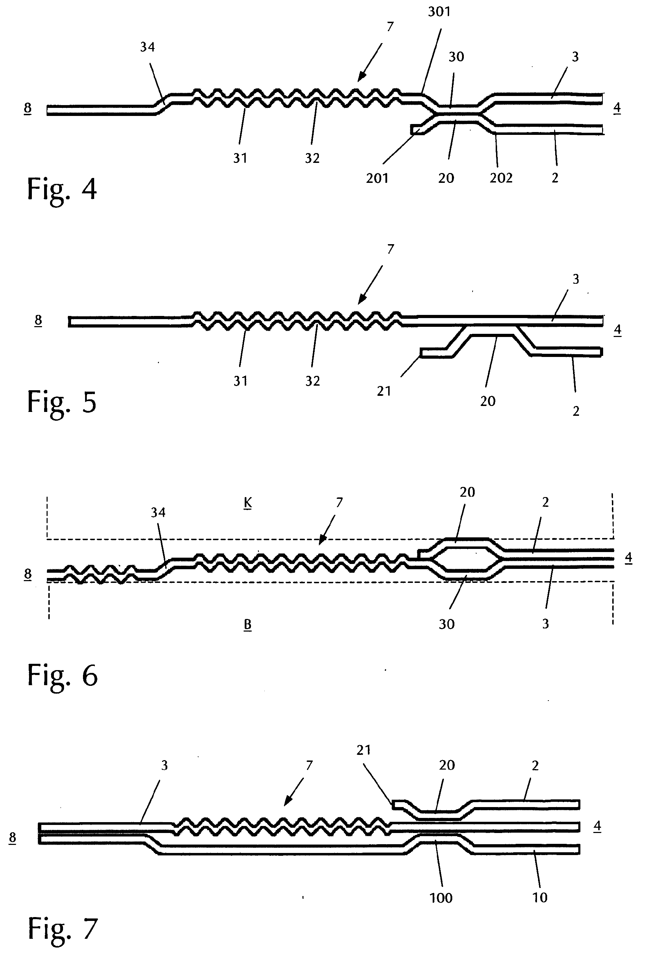

- Figuren 4 bis 7: weitere Ausführungsbeispiele erfindungsgemäßer metallischer Flachdichtungen in Teil-Querschnitten in einem Bereich um eine Durchgangsöffnung;

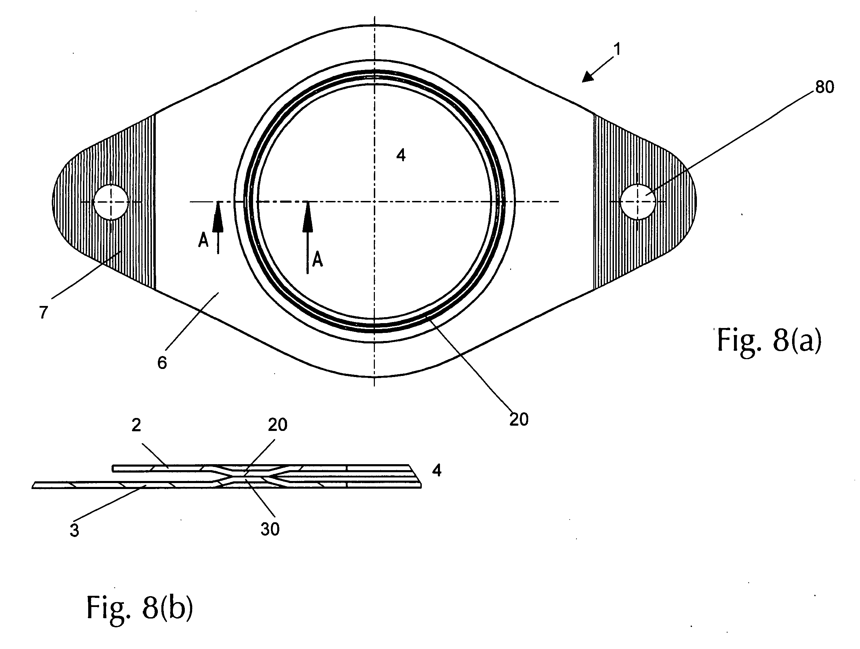

- Figur 8(a): eine Draufsicht auf ein weiteres Beispiel einer erfindungsgemäßen metallische Flachdichtung am Beispiel einer Flanschdichtung;
- Figur 8(b): einen Querschnitt entlang der Linie A-A in Figur 8(a);

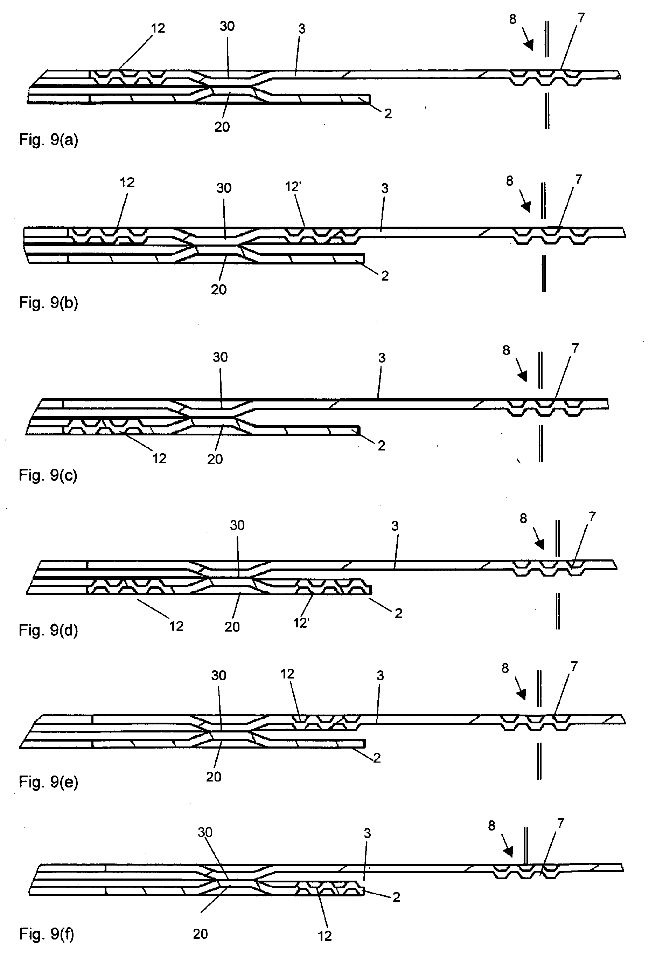

- Figuren 9(a) bis 9(f): verschiedene Teil-Querschnittsansichten unterschiedlicher Ausführungsformen zweilagiger metallischer Flachdichtungen im Bereich zwischen einer Durchgangsöffnung und einer Schraubenöffnung sowie

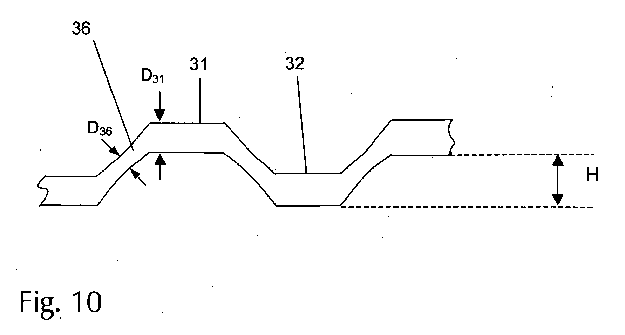

- Figur 10: einen Teilquerschnitt durch einen mit Erhebungen und Vertiefungen versehenen Ausgleichsbereich einer erfindungsgemäßen metallischen Flachdichtung.

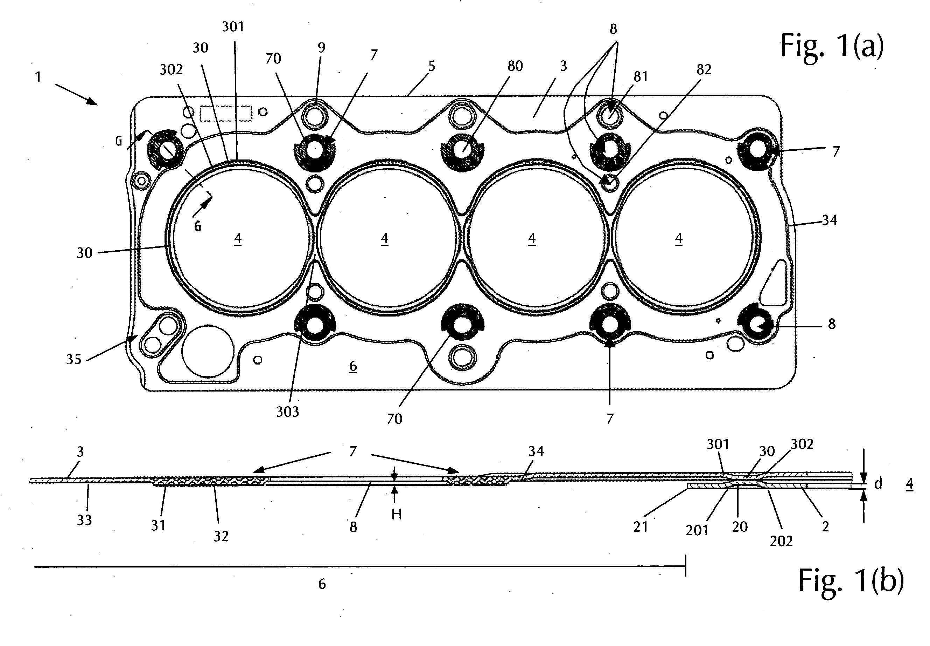

Figur 1(a) zeigt eine metallische Flachdichtung 1 am Beispiel einer Zylinderkopfdichtung in der Draufsicht auf ihre zweite Dichtungslage 3, die sich im Wesentlichen über die gesamte Oberfläche der abzudichtenden Gegenflächen (also eines Motorblocks und eines Zylinderkopfes) erstreckt. Die zweite Dichtungslage 3 besteht beispielsweise aus Federstahl. In sie sind verschiedene Durchgangsöffnungen eingebracht, nämlich im Inneren der Dichtungslage vier nebeneinander angeordnete Durchgangsöffnungen 4, die den Brennraumöffnungen entsprechen. Um die Brennraumöffnungen 4 herum sind zum Rand 5 der Dichtung 1 hin verschiedene weitere Öffnungen 8 in der zweiten Dichtungslage 3 vorhanden. Im Einzelnen sind dies Schraubenöffnungen 80, Ölöffnungen 81 und Öffnungen 82 für Kühlflüssigkeit, insbesondere Wasser.

Die Durchgangsöffnungen 4 sind jeweils von einer diese umschließende Sicke 30 umgeben. Der Verlauf der Sicken 30 ist hier durch jeweils zwei Linien angegeben, welche die Lage der Sickenfüße 301 und 302 verdeutlichen. Es ist erkennbar, dass im Stegbereich 303 zwischen benachbarten Durchgangsöffnungen 4 die Sicken 30 zu einem einzigen Sickenabschnitt zusammenlaufen. Die Querschnittsform der Sicken 30 ist grundsätzlich beliebig. Wie in Figur 1(b) erkennbar, haben die Sicken 30 im gezeigten Fall einen trapezförmigen Querschnitt. Es können jedoch auch Sicken mit gerundetem Querschnitt verwendet werden.

Die Ölöffnungen 81 im Randbereich 6 der zweiten Dichtungslage 3 sind ebenfalls von einem elastisch verformbaren Abdichtelement 9 umgeben. Auch hier kann es sich um eine in die Dichtungslage eingeformte Sicke handeln. Alternativ kann eine Elastomerwulst als Dichtelement eingesetzt werden. Zur Abdichtung der Wasseröffnungen 82 ist in die Dichtungslage 3 eine Halbsicke 34 eingeformt, welche im Bereich zwischen der Brennraumsicke und dem Außenrand 5 der Dichtung in sich geschlossen umläuft.

Zur Abdichtung der Durchgangsöffnungen 4 sind in einer ersten Dichtungslage 2 weitere Sicken 20 vorhanden. Die erste Dichtungslage 2 ist in der Draufsicht der Figur 1 (a) nicht zu erkennen, da sie unterhalb der zweiten Dichtungslage 3 angeordnet ist. Dies ist in Figur 1 (b) zu sehen. Erkennbar ist weiterhin, dass die erste Dichtungslage 2 eine wesentlich geringere Ausdehnung als die zweite Dichtungslage 3 hat. Die erste Dichtungslage 2 ist brillenartig ausgebildet und erstreckt sich ausschließlich in unmittelbarer Nachbarschaft um die Durchgangsöffnungen 4. Ihre Breite ist hier nur etwa dreimal so groß wie der Abstand zwischen den Sickenfüßen 201 und 202 der Sicke 20. Form und Verlauf der Sicken 20 entsprechen vollkommen denjenigen der Sicken 30 der zweiten Dichtungslage 3. Die Sicken 20 und 30 sind also spiegelsymmetrisch zueinander ausgebildet und liegen mit ihren Sickenscheiteln aneinander an. Auch das Material, aus dem die erste Dichtungslage 2 gefertigt ist, entspricht demjenigen der zweiten Dichtungslage 3. Im Ergebnis haben deswegen die Sicken 20 und 30 die gleiche Federcharakteristik.

Die erste Dichtungslage 2 spart den Randbereich 6 der zweiten Dichtungslage 3 vollkommen aus. Entsprechend sind in der ersten Dichtungslage 2 auch ausschließlich Durchgangsöffnungen 4, ansonsten aber keine weiteren Durchgangsöffnungen vorhanden. Im Randbereich 6 besteht die erfindungsgemäße Flachdichtung 1 ausschließlich aus der zweiten Dichtungslage 3. Aufgrund dieser Konstruktion wird im Bereich um die Durchgangsöffnungen 4 eine größere Materialstärke erreicht als im Randbereich 6, wo die erste Dichtungslage 2 nicht vorhanden ist. Aufgrund dessen erhöht sich die Pressung im Bereich um die Durchgangsöffnungen 4, sodass hier eine verbesserte Abdichtung der Brennraumöffnungen erreicht werden kann. Die Sicken 20 und 30 liegen im Krafthauptschluss. Der Unterschied in den Materialstärken im Bereich um die Brennraumöffnungen 4 und im Randbereich 6 entspräche ohne weitere Maßnahmen der Dicke d der ersten Dichtungslage 2. Mit diesem Dickenunterschied lässt sich jedoch häufig die gewünschte Pressungserhöhung nicht einstellen. Die Materialaufdickung ist oft größer als gewünscht und zulässig. Um dieser zu großen Materialverstärkung entgegen zu wirken und die gewünschte Pressung nach Wunsch einstellen zu können, ist erfindungsgemäß im Randbereich 6 der zweiten Dichtungslage 3 ein Ausgleichsbereich 7 vorgesehen. Dieser Ausgleichsbereich 7 steht mit einer Höhe H über die Oberfläche 33 der zweiten Dichtungslage 3 in Richtung auf die erste Dichtungslage 2 hin vor. Die Höhe H ist dabei geringer als die Dicke d der ersten Dichtungslage 2, sodass insgesamt eine Materialverdickung im Bereich um die Brennraumöffnungen 4 erhalten bleibt. Durch geeignete Wahl der Höhe H des Ausgleichsbereichs 7 kann die gewünschte Pressungserhöhung im Bereich um die Brennraumöffnungen gezielt eingestellt werden. Konkret geschieht dies dadurch, dass im Ausgleichsbereich 7, der aus einander abwechselnden Erhebungen 31 und Vertiefungen 32 gebildet ist, die Erhebungen 31 mit einer bestimmten Höhe erzeugt werden. Bei einer Dicke der zweiten Dichtungslage 3 von 0,2 mm liegt die Höhe H des Ausgleichsabschnitts 7 beispielsweise bei 0,1 bis 0,18 mm, insbesondere 0,15 mm.

Im gezeigten Beispiel besteht der Ausgleichsbereich 7 aus mehreren Abschnitten 70, die jeweils eine Schraubenöffnung 80 umgeben. Die einzelnen Abschnitte 70 des Ausgleichsbereichs 7 bestehen aus einer wellenförmigen Strukturierung der zweiten Dichtungslage 3. Im unmittelbar an die Schraubenöffnungen 80 angrenzenden Bereich verlaufen die Erhebungen 31 und Vertiefungen 32 in Form einander abwechselnder konzentrischer Ringe. In den weiter weg von den Schraubenöffnungen 80 angeordneten Bereichen sind die Erhebungen und Vertiefungen nur noch als konzentrische Ringsegmente ausgebildet. Bei der gezeigten Ausgestaltung des Ausgleichsbereichs 7 können die Erhebungen 31 und Vertiefungen 32 der einzelnen Abschnitte 70 gleichzeitig als Abdicht- und Abstützelemente für die Schraubenöffnungen 80 dienen. Die gleichmäßige Verteilung der Schraubenöffnungen 80 und damit auch der Abschnitte 70 des Ausgleichsbereichs 7 um die Brennraumöffnungen 4 herum sorgt für eine gleichmäßige Einstellung der Pressung im Bereich um die Brennraumöffnungen 4. Zudem hält der Ausgleichsbereich 7 einen hinreichenden Abstand zum Rand 21 der ersten Dichtungslage 2 ein, sodass durch den Ausgleichsbereich auch keine Beeinträchtigung der Funktion der Sicken der ersten Dichtungslage erfolgt. Die Arbeit der Sicken 20 wird durch den Ausgleichsbereich 7 nicht gestört.

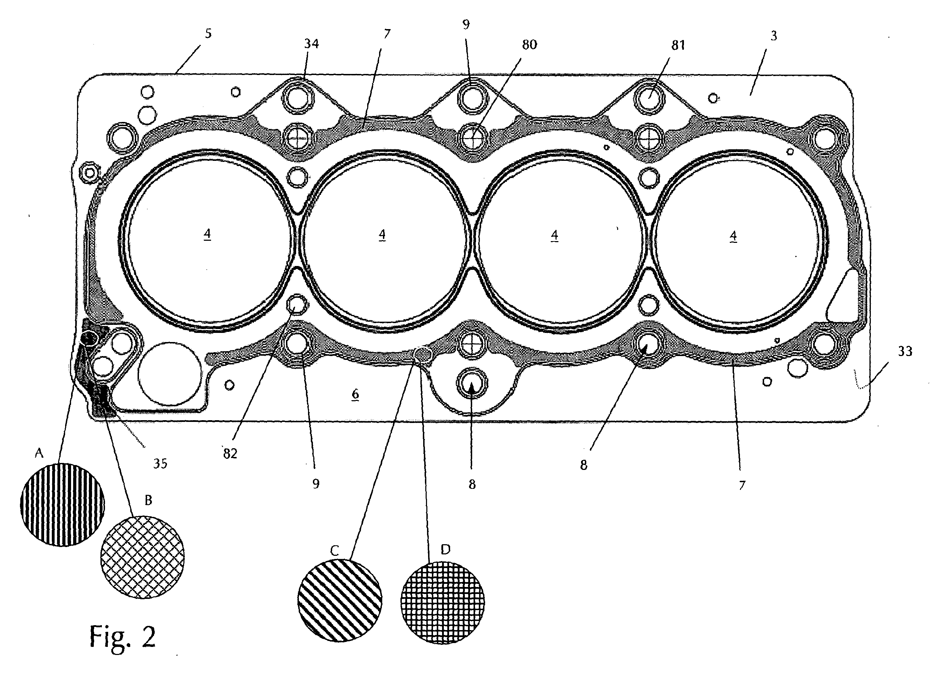

Figur 2 zeigt eine Draufsicht auf eine zweite Dichtungslage 3 eines anderen Ausführungsbeispiels einer metallischen Zylinderkopfdichtung. Abgesehen von der Ausgestaltung des Ausgleichsbereichs 7 entspricht diese Dichtung vollständig derjenigen, die in Figuren 1 (a) und 1 (b) dargestellt ist. Die erste Dichtungslage 2 ist erneut unter der zweiten Dichtungslage 3 angeordnet und entspricht der in Figur 1 (b) gezeigten. Im Beispiel der Figur 2 ist der Ausgleichsbereich 7 zusammenhängend ausgebildet. Er umgibt die Durchgangsöffnungen 4 mit einem Abstand zu diesen im Wesentlichen vollständig und ist lediglich in der linken unteren Ecke der zweiten Dichtungslage 3 unterbrochen. Hier befindet sich erneut ein abgesenkter Bereich 35. Der Ausgleichsbereich 7 ist lediglich in einem relativ schmalen Streifen auf der zweiten Dichtungslage 3 vorhanden und endet vor der Halbsicke 34, zu der der Ausgleichsbereich einen Abstand einhält.

Die Erhebungen des Ausgleichsbereichs 7 sind nicht wie in den vorangegangenen Figuren beschrieben in Form konzentrischer Ringe ausgebildet, sondern die Erhebungen 31 und Vertiefungen 32 weisen hier beispielsweise die Form von Erhebungen und Vertiefungen auf, die jeweils abwechselnd auf geraden Linien angeordnet sind. Diese geraden Linien sind virtuelle Linien, die über den gesamten Ausgleichsbereich in paralleler Anordnung verlaufen. Diese virtuellen Linien schneiden dabei auch die Durchgangsöffnungen 4 und die sie umgebenden Sicken 30. Die Erhebungen und Vertiefungen sind dabei jedoch nur in den schraffiert eingezeichneten Bereichen vorhanden. Insgesamt ergibt sich damit eine lineare Anordnung der Erhebungen und Vertiefungen im Ausgleichsbereich 7, wie dies auch in den Ausschnitten A und C verdeutlicht wird. Im abgesenkten Bereich 35 kann die Strukturierung parallel zur Erstreckungsrichtung der Erhebungen und Vertiefungen der übrigen Bereiche verlaufen oder aber in einem Winkel dazu. Die Höhe, mit welcher die Erhebungen über die Oberfläche 33 der zweiten Dichtungslage in Richtung auf die erste Dichtungslage 2 hin vorstehen, kann erneut entsprechend der erwünschten Pressung eingestellt werden. Dabei ist es möglich, die Höhe der Erhebungen im Ausgleichsbereich zu variieren. Auf diese Weise kann den Bauteilsteifigkeiten Rechnung getragen werden und eine Vergleichmäßigung der Pressung um die Durchgangsöffnungen 4 herum erreicht werden. Selbstverständlich ist es ebenfalls möglich, falls dies gewünscht ist, eine unregelmäßige Pressungsverteilung im Bereich um eine Durchgangsöffnung 4 herum oder von einer Durchgangsöffnung auf eine andere Durchgangsöffnung 4 einzustellen. Prinzipiell ist es auch möglich, dass die Strukturierung so ausgebildet ist, dass sich z.B. zwei Scharen paralleler virtueller Linien schneiden, so dass sich bei gleichen Abständen ein Schachbrettmuster von Erhebungen und Vertiefungen ergibt. Diese Möglichkeit ist in den Ausschnitten B und D angedeutet.

Figuren 3(a) bis 3(d) veranschaulichen die Anordnung einer erfindungsgemäßen metallischen Flachdichtung am Beispiel einer zweilagigen Zylinderkopfdichtung im Dichtspalt zwischen einem Motorblock und einem Zylinderkopf. Der in Figur 3(a) dargestellte Motorblock ist in Open-Deck-Bauweise ausgeführt. Der Motorblock besteht beispielsweise aus Grauguss oder einer AluminiumLegierung. Die vier Zylinderbohrungen 4' werden von einem Wassermantel 82' umgeben. Der Wassermantel 82' ist in der Ebene der abzudichtenden Oberfläche B1 nach oben hin offen. Um den Wassermantel 82' herum sind im Motorblock B verschiedene Schraubenöffnungen 80' sowie Ölöffnungen 81' vorhanden.

Der zum Motorblock B gehörige Zylinderkopf K ist in Figur 3(b) dargestellt. Der Lage der Öffnungen im Motorblock B entsprechend sind im Zylinderkopf K Zylinderbohrungen 4", Schraubenöffnungen 80", Ölöffnungen 81" und Wasseröffnungen 82" vorhanden.

Zwischen Motorblock und Zylinderkopf wird die erfindungsgemäße Zylinderkopfdichtung eingelegt. Im gezeigten Beispiel handelt es sich um eine zweilagige Zylinderkopfdichtung mit einer ersten Dichtungslage 2 (Figur 3(d)) und einer zweiten Dichtungslage 3. Letztere ist in Figur 3(c) gezeigt und wird beispielsweise so angeordnet, dass die vom Betrachter weg weisende Oberfläche der Dichtungslage an der Oberfläche K1 des Zylinderkopfes K zu liegen kommt. Die Ausgestaltung der zweiten Dichtungslage 3 entspricht im Wesentlichen derjenigen in Figur 2. Zusätzlich ist die Oberfläche der Dichtungslage 3 mit einer Beschichtung 11 versehen. Diese Beschichtung reicht vom inneren Rand des Ausgleichsbereichs 7 bis über die Halbsicke 34 teilweise bis zum Rand 5 der Dichtung hin. Sie bedeckt außerdem den linken schmalseitigen Randabschnitt der Dichtungslage 3. Die Beschichtung 11 kann beispielsweise durch ein Siebdruckverfahren aufgetragen sein und besteht bevorzugt aus Kunststoff, beispielsweise Fluorpolymeren. Mit einer derartigen Beschichtung können die Mikroabdichtung und die Gleitreib-Eigenschaften der Dichtung verbessert werden. Das Vorhandensein des Ausgleichsbereichs 7 mit seiner durch die Erhebungen und Vertiefungen vergrößerten Oberfläche ermöglicht es, die Beschichtung 11 mit einer größeren Dicke aufzutragen als auf einen unstrulcturierten Bereich. Zudem wird durch die Strukturierung die Haftung der Beschichtung 11 auf der metallischen Dichtungslage 3 verbessert. Bevorzugt ist die Beschichtung 11 auch auf der gegenüberliegenden, in Figur 3(c) nicht sichtbaren zweiten Oberfläche 33 der Dichtungslage 3 vorhanden.

Die erste Dichtungslage 2 ist brillenartig ausgebildet und weist vier Brennraumöffnungen 4 auf, die jeweils von einer Sicke 20 umgeben sind, wie aus Figur 3(d) deutlich wird. Die Sicken 20 laufen im Stegbereich 203 zu einem gemeinsamen Sickenabschnitt zusammen, wie dies bereits im Zusammenhang mit Figur 1 (a) beschrieben wurde. Außer den Brennraumöffnungen 4 weist die erste Dichtungslage keine weiteren Durchgangsöffnungen auf

Die erste Dichtungslage 2 ist bereits vor der Montage der Zylinderkopfdichtung an der zweiten Dichtungslage 3 befestigt, beispielsweise durch Punktschweißen. Dabei wird die erste Dichtungslage 2 so über der zweiten Dichtungslage 3 angeordnet, dass die Durchgangsöffnungen 4 jeweils exakt übereinander zu liegen kommen und die Sicken 20 und 30 mit ihren Scheiteln aufeinander liegen. Die Zylinderkopfdichtung mit erster und zweiter Dichtungslage wird anschließend so auf dem Motorblock B befestigt, dass die erste Dichtungslage 2 auf der Oberfläche B1 des Motorblocks aufliegt. Die Durchgangsöffnungen 4 der Zylinderkopfdichtung und die Zylinderbohrungen 4' werden dabei exakt übereinander positioniert. Die erste Dichtungslage 2 liegt dabei auf den Zylindermänteln B2 des Motorblocks B auf. Die zweite Dichtungslage 3 dagegen reicht über die Kühlwasseröffnung 82' hinaus und bedeckt die Oberfläche B1 des Motorblocks B im Wesentlichen vollständig. Der innere Rand 71 des Ausgleichsbereichs 7 reicht dabei bis unmittelbar an den äußeren Rand 820' des Wassermantels 82' heran. Die Montage wird dadurch abgeschlossen, dass der Zylinderkopf K über der zweiten Dichtungslage 3 positioniert wird und mittels Schrauben, welche durch die Schraubenöffnungen 80", 80 und 80' hindurch geführt werden, am Motorblock festgezogen wird.

Figuren 4 bis 7 zeigen Teil-Querschnitte durch weitere Ausführungsbeispiele erfindungsgemäßer metallischer Flachdichtungen. Es kann sich hierbei um verschiedene Arten von Flachdichtungen handeln, so auch um Flansch- oder Krümmerdichtungen. Die Querschnitte sind aber am Beispiel von Zylinderkopfdichtungen erläutert. Gezeigt ist jeweils ein Querschnitt zwischen einer Brennraumöffnung 4 und einer Öffnung 8 im Randbereich 6 der Dichtung. Bei der Öffnung 8 kann es sich beispielsweise um eine Schraubenöffnung handeln.

Figur 4 zeigt einen Querschnitt einer Zylinderkopfdichtung ähnlich derjenigen, die in Figur 1b dargestellt ist. Zur Abdichtung der Brennraumöffnungen 4 sind erneut zwei spiegelsymmetrisch zueinander angeordnete Sicken 20 und 30 vorhanden, die einen trapezförmigen Querschnitt aufweisen und deren Scheitel aufeinander liegen. In der ersten Dichtungslage 2 ist der an den äußeren Sickenfuß 201 anschließende Randabschnitt gegenüber der ersten Dichtungslage der in Figur 1 dargestellten Dichtung verkürzt. Der Ausgleichsbereich 7 schließt sich mit relativ geringem Abstand an den äußeren Sickenfuß 301 in der zweiten Dichtungslage 3 an. Er besteht aus Erhebungen 31 und Vertiefungen 32, die auf virtuellen parallelen Linien einander abwechselnd angeordnet sind. In Richtung auf den Außenrand der zweiten Dichtungslage 3 hin schließt sich an den Ausgleichsbereich 7 eine Halbsicke 34 an, die ähnlich wie in Figuren 1 und 2 zur Abdichtung der Wasseröffnungen dienen kann. Im Bereich um die Öffnung 8 ist im gezeigten Beispiel weder ein Dichtelement noch ein Ausgleichsbereich vorhanden.

Figur 5 zeigt ein weiteres Beispiel einer zweilagigen Zylinderkopfdichtung, in der nur in der ersten Dichtungslage 2 eine Sicke 20 zur Abdichtung der Brennraumöffnung 4 ausgebildet ist. Die zweite Dichtungslage 3 ist dagegen vollständig ohne Sicken und im gezeigten Ausschnitt abgesehen von dem Ausgleichsbereich 7 eben. Dies schließt jedoch nicht aus, dass zur Abdichtung der Wasser- und Ölöffnungen im Randbereich der zweiten Dichtungslage 3 elastisch verformbare Dichtelemente vorgesehen sind, die beispielsweise aus auf die Dichtungslage aufgetragenen oder an die Öffnungsränder angespritzten Dichtwülsten aus Elastomer bestehen können.

Figur 6 zeigt einen Querschnitt durch ein weiteres Beispiel einer zweilagigen Zylinderkopfdichtung. Hier ist die Orientierung von erster Dichtungslage 2 und zweiter Dichtungslage 3 zueinander anders als in den vorangegangenen Beispielen. Zum Einen weisen die Scheitel der Sicken 20 und 30 voneinander weg, sodass hier die jeweiligen Sickenfüße der Sicken aufeinander zu liegen kommen. Außerdem ist die erste Dichtungslage 2 oberhalb der zweiten Dichtungslage angeordnet. So ist hier die erste Dichtungslage 2 in Richtung zum Zylinderkopf K hin orientiert, während die zweite Dichtungslage 3 auf einem Motorblock B aufliegt. Gezeigt ist ein nicht verpresster Zustand der besagten Komponenten. Abgesehen davon, dass um die Öffnung 8, zum Beispiel eine Schraubenöffnung, herum eine Strukturierung vorzugsweise in Form von konzentrisch zueinander verlaufenden Ringen (vergleiche Figur 1) oder von parallel zueinander verlaufenden Erhebungen und Vertiefungen vorhanden ist, unterscheidet sich die dargestellte Dichtung im Randbereich sonst nicht weiter von derjenigen der Figur 4.

Figur 7 stellt einen Teil-Querschnitt durch eine dreilagige Zylinderkopfdichtung dar. Die erste, verkürzte Dichtungslage 2 entspricht grundsätzlich der in Figur 4 beschriebenen, ist nun jedoch als oberste (zum Beispiel zum Zylinderkopf hin) orientierte Dichtungslage vorgesehen. Bei der zweiten Dichtungslage 3 handelt es sich nun um ein Glattblech, das keine Sicken enthält. Eine solche Dichtungslage ohne aktive Dichtelemente wird üblicherweise als Distanzblech bezeichnet. Im Unterschied zu herkömmlichen Distanzblechen ist in der zweiten Dichtungslage 3 nun aber der Ausgleichsbereich 7 ausgebildet, der sich im Anschluss an den Außenrand 21 der ersten Dichtungslage erstreckt. Bei der Strukturierung des Ausgleichsbereichs 7 kann es sich erneut um auf parallelen virtuellen Linien angeordnete Erhebungen und Vertiefungen handeln.

Figur 8 verdeutlicht in Teilbildern 8(a) und 8(b) die Anwendung der erfindungsgemäßen Lösung am Beispiel einer Flanschdichtung mit einer einzigen Durchgangsöffnung 4 für z.B. Abgase oder Flüssigkeiten. Zur Befestigung an den abzudichtenden Bauteilen weist die erfindungsgemäße Flanschdichtung 1 zwei Befestigungsöffnungen 80 auf. Die erste Dichtungslage 2 mit der Sicke 20 erstreckt sich nur über einen sehr begrenzten, ungefähr kreisförmigen Bereich in unmittelbarer Nähe der Durchgangsöffnung 4. Im Bereich der Befestigungsmittelöffnungen 80 ist Ausgleichsbereich in Form einer Strukturierung 7 vorhanden. Im Randbereich 6 ist nur die Lage 3 vorhanden, die wiederum eine Sicke 30 auf, die spiegelsymmetrisch zur Sicke 20 angeordnet ist.

Figuren 9(a) bis 9(f) zeigen Teil-Querschnitte durch weitere Ausführungsbeispiele zweilagiger metallischer Flachdichtungen. Die gezeigten Querschnitte sind auch für andere Arten von Flachdichtungen einsetzbar, werden aber für Zylinderkopfdichtungen näher beschrieben. Gezeigt ist der Bereich zwischen einer Durchgangsöffnung 4 und einer Öffnung 8, insbesondere einer Befestigungsmittelöffnung. Im Bereich der Öffnungen 8 können die Zylinderkopfdichtungen wie diejenigen der Figur 1 (a) ausgebildet sein. Abschnitte des Ausgleichsbereichs 7 sind also jeweils um die einzelnen Öffnungen 8 herum vorhanden. Die einzelnen Dichtungen unterscheiden sich jeweils in der Ausgestaltung der Bereiche um die Durchgangsöffnungen 4 herum. Im Unterschied zu den zuvor beschriebenen Dichtungen sind in den Dichtungen der Figur 9 nun jeweils Verformungsbegrenzer 12 für die Sicken 20 und 30 vorhanden, die ein vollständiges Abplatten der Sicken im Betrieb verhindern sollen. Die Verformungsbegrenzer 12 bestehen jeweils in einer Strukturierung, die ähnlich derjenigen des Ausgleichsbereichs 7 ausgebildet sein kann, jedoch eine geringere Höhe aufweist als letztere. Die Verformungsbegrenzer 12 für die Sicken 20 und 30 werden bevorzugt durch Prägen hergestellt und bestehen ebenfalls aus einander abwechselnden Erhebungen und Vertiefungen in der jeweiligen Dichtungslage 2 oder 3. Bevorzugt werden die Verformungsbegrenzer 12 im selben Arbeitsschritt wie der Ausgleichsbereich 7 erzeugt.

In der in Figur 9(a) gezeigten Dichtung ist ein Verformungsbegrenzer 12 am brennraumseitigen Rand der zweiten Dichtungslage 3 vorhanden. In der Dichtung gemäß Figur 9(b) ist zusätzlich zur vorstehend beschriebenen Dichtung ein zweiter Verformungsbegrenzer 12' auf der der Brennraumöffnung 4 abgewandten Seite der Sicke 30 angeordnet. In der Dichtung gemäß Figur 9(c) ist ein Verformungsbegrenzer 12' in der ersten Dichtungslage 2 auf deren Brennraumseite ausgebildet, während in der Dichtung gemäß Figur 9(d) ein weiterer Verformungsbegrenzer 12 in der ersten Dichtungslage auf der vom Brennraum abgewandten Seite der Sicke 20 zusätzlich vorhanden ist.

In den Dichtungen gemäß Figuren 9(e) und 9(f) ist jeweils ein Verformungsbegrenzer 12 auf der vom Brennraum abgewandten Seite der Sicken ausgebildet und zwar in der Dichtung gemäß Figur 9(e) in der zweiten Dichtungslage 3 und in Figur 9(f) in der ersten Dichtungslage 2.

Wie bereits erwähnt, werden die Erhebungen 31 und Vertiefungen 32 des Ausgleichsbereichs und, falls vorhanden, auch der Verformungsbegrenzer 12 bevorzugt durch Prägen hergestellt. Der Prägeschritt geschieht bevorzugt unter Verwendung eines Prägewerkzeugs mit zwei komplementären Prägeformen. Diese Prägeformen weisen zweckmäßig jeweils Prägevorsprünge auf, die in entsprechende Vertiefungen der komplementären Prägeform eingreifen. Erhebungen und Vertiefungen der einen Prägeform sind also versetzt gegenüber den Erhebungen und Vertiefungen der komplementären Prägeform angeordnet. Sind die Erhebungen und Vertiefungen der komplementären Prägeformen jeweils gleichartig ausgebildet, ergibt sich aus dieser Werkzeugkonstellation eine besondere Materialstärkenverteilung in dem mit der Prägeform strukturierten Bereich der bearbeiteten Dichtungslage. Dies soll schematisch anhand der Figur 10 verdeutlicht werden.

Figur 10 zeigt einen Ausschnitt aus einer zweiten Dichtungslage in einem Ausgleichsbereich 7. In diesen Bereich sind Erhebungen 31 und Vertiefungen 32 eingeprägt. Die Erhebungen 31 stehen mit einer Höhe H über die Oberfläche O der Dichtungslage 3 vor. Durch das Prägen wurde die Dicke der Dichtungslage 3 im Bereich der Flanken 36 gegenüber der Dicke der Erhebungen 31 bzw. Vertiefungen 32 verringert. Die Dicke D₃₆ im Flankenbereich ist also geringer als die Dicke D₃₁ der Dichtungslage 3 im Bereich der Erhebungen bzw. Vertiefungen. Diese Umformung des Materials und Verringerung der Materialdicke führt zur Erhöhung der Steifigkeit des strukturierten Bereiches. Das Ausmaß der Flankenverjüngung ist in Figur 10 übersteigert dargestellt. Es beträgt häufig zwischen 10 und 25 %, insbesondere zwischen 13 und 19 %.

## Patentansprüche

1. Metallische Flachdichtung (1) mit wenigstens einer ersten und einer zweiten Dichtungslage (2, 3), in der zumindest in die erste Dichtungslage (2) eine Sicke (20) eingeformt ist, welche eine durch die Flachdichtung (1) hindurchgehende Durchgangsöffnung (4) in sich geschlossen umgibt,
**dadurch gekennzeichnet,**
**dass** die erste Dichtungslage (2) eine geringere Flächenausdehnung als die zweite Dichtungslage (3) aufweist und einen an den Außenrand (5) der Flachdichtung (1) angrenzenden Randbereich (6) freilässt und
**dass** in der zweiten Dichtungslage (3) im Randbereich (6) ein zumindest in Richtung auf die erste Dichtungslage (2) vorstehender Ausgleichsbereich (7) mit einer Höhe (H) vorhanden ist, die geringer ist als die Dicke (d) der ersten Dichtungslage (2), wobei der Ausgleichsbereich (7) außerhalb des Außenrandes (21) der ersten Dichtungslage (2) zumindest abschnittsweise angeordnet ist und aus einer Vielzahl in die zweite Dichtungslage (3) eingeformter, einander abwechselnder Erhebungen (31) und Vertiefungen (32) besteht.

2. Metallische Flachdichtung nach Anspruch 1,
**dadurch gekennzeichnet,**
**dass** der Ausgleichsbereich (7) im Bereich um mehrere im Randbereich (6) der zweiten Dichtungslage (3) befindliche Öffnungen (8) vorhanden ist.

3. Metallische Flachdichtung nach Anspruch 2,
**dadurch gekennzeichnet,**
**dass** der Ausgleichsbereich (7) mehrere Öffnungen (8) zusammenhängend umgibt.

4. Metallische Flachdichtung nach Anspruch 1-3,
**dadurch gekennzeichnet,**
**dass** der Ausgleichsbereich (7) entlang wenigstens 35 %, bevorzugt wenigstens 50 % und insbesondere wenigstens 70 % der Länge des Außenrandes (21) der ersten Dichtungslage (2) verläuft.

5. Metallische Flachdichtung nach Anspruch 1 oder 2,
**dadurch gekennzeichnet,**
**dass** der Ausgleichsbereich (7) in separate Abschnitte (70) aufgeteilt ist, die jeweils eine der Öffnungen (8) ganz oder teilweise umgeben.

6. Metallische Flachdichtung nach Anspruch 5,
**dadurch gekennzeichnet,**
**dass** die von dem separaten Abschnitt (70) umgebende Öffnung (8) eine Befestigungsmittelöffnung (80) ist.

7. Metallische Flachdichtung nach einem der vorhergehenden Ansprüche,
**dadurch gekennzeichnet,**
**dass** die Höhe (H) des Ausgleichsbereichs (7) 0,02 bis 0,30 mm, insbesondere 0,05 bis 0,20 mm, beträgt.

8. Metallische Flachdichtung nach einem der vorhergehenden Ansprüche,
**dadurch gekennzeichnet,**
**dass** die Erhebungen (31) und Vertiefungen (32) wellenartig in Form einander abwechselnder konzentrischer Ringe oder Ringsegmente ausgebildet sind.

9. Metallische Flachdichtung nach einem der Ansprüche 1 bis 7,
**dadurch gekennzeichnet,**
**dass** die Erhebungen (31) und Vertiefungen (32) auf wenigstens einer Schar im Wesentlichen parallel über die Gesamtausdehnung des Ausgleichsbereiches (7) verlaufender virtueller gerader Linien angeordnet sind.

10. Metallische Flachdichtung nach Anspruch 9,
**dadurch gekennzeichnet,**
**dass** die Vertiefungen (32) entlang mindestens zweier sich schneidender Scharen virtueller gerader Linien und insbesondere entlang sich rechtwinklig schneidender virtueller gerader Linien verlaufen.

11. Metallische Flachdichtung nach einem der vorhergehenden Ansprüche,
**dadurch gekennzeichnet,**
**dass** die Vertiefungen (32) in die zweite Dichtungslage (3) eingeprägt sind, wobei bevorzugt die Dicke (D₃₆) der zweiten Dichtungslage (3) im Flankenbereich (36) gegenüber der Dicke (D₃₁) der zweiten Dichtungslage (3) im Bereich der Erhebungen (31) oder Vertiefungen (32) verringert ist.

12. Metallische Flachdichtung nach einem der vorhergehenden Ansprüche,
**dadurch gekennzeichnet,**
**dass** der Ausgleichsbereich (7) mit einem Abstand zu diesen radial außerhalb der Dichtelemente (9) verläuft, wobei der Abstand bevorzugt mindestens 0,1 mm beträgt.

13. Metallische Flachdichtung nach einem der Ansprüche 2 bis 11,
**dadurch gekennzeichnet,**
**dass** zumindest ein Teil der Öffnungen (8) im Randbereich (6) von Dichtelementen (9) umgeben ist, die
- aus Elastomer bestehen und/oder
- von einer in die zweite Dichtungslage (3) eingeformten Sicke (30) gebildet wird und/oder
- aus wellenartigen konzentrischen Ringen gemäß Anspruch 8 bestehen.

14. Metallische Flachdichtung nach einem der vorhergehenden Ansprüche,
**dadurch gekennzeichnet,**
**dass** der Ausgleichsbereich (7) einen Abstand zum Außenrand (5) der zweiten Dichtungslage (3) einhält.

15. Metallische Flachdichtung nach einem der Ansprüche 1 bis 13,
**dadurch gekennzeichnet,**
**dass** der Ausgleichsbereich (7) bis zum Außenrand (5) der zweiten Dichtungslage (3) reicht.

16. Metallische Flachdichtung nach einem der vorhergehenden Ansprüche,
**dadurch gekennzeichnet,**
**dass** der Ausgleichsbereich (7) zumindest einen ersten Abschnitt (71) aufweist, der relativ zur ersten Oberfläche der zweiten Dichtungslage (3) verdickt ist und einen zweiten Abschnitt (72), der relativ zur zweiten Oberfläche der zweiten Dichtungslage (3) verdickt ist.

17. Metallische Flachdichtung nach einem der vorhergehenden Ansprüche,
**dadurch gekennzeichnet,**
**dass** die erste Dichtungslage (2) brillenartig ausgebildet ist.

18. Metallische Flachdichtung nach einem der vorhergehenden Ansprüche,
**dadurch gekennzeichnet,**
**dass** in die zweite Dichtungslage (3) um jede Durchgangsöffnung (4) eine diese umgebende Sicke (30) eingeformt ist.

19. Metallische Flachdichtung nach einem der Ansprüche 1 bis 17,
**dadurch gekennzeichnet,**
**dass** die zweite Dichtungslage (3) keine die wenigstens eine Durchgangsöffnung (4) umgebende Sicke und insbesondere überhaupt keine Sicken enthält.

20. Metallische Flachdichtung nach einem der vorhergehenden Ansprüche,
**dadurch gekennzeichnet,**
**dass** wenigstens eine weitere Dichtungslage (10) vorhanden ist, insbesondere eine Dichtungslage, in die um jede Durchgangsöffnung (4) herum eine diese umgebende Sicke (100) eingeformt ist.

21. Metallische Flachdichtung nach Anspruch 20,
**dadurch gekennzeichnet,**
**dass** die eine Durchgangsöffnung (4) umgebenden Sicken der ersten und zweiten Dichtungslage (2, 3) bzw. der ersten und weiteren Dichtungslage (2, 10) gleichartig ausgebildet sind.

22. Metallische Flachdichtung nach einem der vorhergehenden Ansprüche,
nämlich Dichtung im Bereich von Verbrennungsmotor oder Abgasstrang, insbesondere Abgaskrümmerdichtung oder Zylinderkopfdichtung, in der die Durchgangsöffnungen (4) Brenngasöffnungen entsprechen.
